# EUROPEAN PATENT SPECIFICATION

(11) **EP 3 038 783 B1**
(45) Date of publication and mention of the grant of the patent: **05.08.2020**
(21) Application number: 14839127.9
(22) Date of filing: 26.08.2014
(51) Int. Cl.: B23K 9/038, B23K 9/20, B23K 37/06

(54) **FERRULE FOR WELDING A STUD TO WORK-PIECE**
HÜLSE ZUM SCHWEISSEN EINES BOLZENS AN WERKSTÜCKE
FERRULE POUR SOUDER UN GOUJON À UNE PIÈCE

(30) Priority: 26.08.2013 US 201361870002 P
(43) Date of publication of application: 06.07.2016
(73) Proprietor: Nelson Stud Welding, Inc., Elyria, OH 44036 (US)
(72) Inventor: CHAMPNEY, Clark, B., Vermilion, OH 44089 (US)
(74) Representative: SBD IPAdmin
(86) International application number: PCT/US2014/052615
(87) International publication number: WO 2015/031303

(56) References cited:
- GB-A- 649 177
- JP-A- 2000 102 872
- US-A- 2 459 957
- US-A- 2 896 065
- US-A- 3 182 173
- US-A- 3 291 438
- US-A- 3 790 740
- US-A- 4 117 297
- US-E- R E22 108

## Description

### FIELD OF THE INVENTION

The invention relates in general to ferrules used in welding operations. More specifically, the invention relates to a ferrule used in a stud welding operation, where the ferrule has a neck that is configured to both center a stud to be welded and to allow for venting of gas heating during the welding operation, which results in energy conservation and heat saving.

### BACKGROUND OF THE INVENTION

Ferrules have been used in welding operations for a long time. For instance, U.S. Pat. No. 2,268,416, entitled "Welding Organization", issued to Nelson on Dec. 30, 1941. The '416 patent discloses one of the earlier known ferrules used in welding operations. The ferrule (18) in the '416 patent snugly received a stud (11) in a neck portion of the ferrule (18). The snug fit of the stud (11) in the ferrule (18) ensured that the stud (11) would remain centered within the ferrule (18), thereby ensuring that the final weld of the stud (11) to a work piece would be properly positioned (e.g., not provided at an undesirable angle relative to the work piece). The end of the stud (11) was positioned in a counterbore (19) of the ferrule (18). The ferrule (18) had a planar working face (e.g., the face of the ferrule that contacts the work piece to which the stud is to be welded). The portion of the counterbore (19) surrounding the end of the stud (11) prevented an appreciable amount of the molten material from falling out of the arc gap when the stud (11) was being welded in an axially horizontal position. Also, when the molten end of the stud (11) was thrust into the arc crater in the work piece, the ferrule (18), in being in contact with the surface of the work piece forms an enclosure which limits radial splattering of the molten metal to the diameter of the counterbore (19). Thus, a majority of the metal is confined closely adjacent the junction of the stud (11) with the result that a weld of maximum strength is obtained.

U.S. Pat. No. 2,416,204, entitled "Vented Molding Ferrule For Electric Stud Welding", issued to Nelson on Feb. 18, 1947. The '204 patent provided an improvement to the ferrule taught in the '416 patent. The ferrule (4) in the '204 patent also snugly received a stud (2) in a neck portion of the ferrule (4). The end of the stud (2) was also provided in a counterbore (7) of the ferrule (4). The ferrule (4) was provided as a means for confining the flux, molten metal and hot gases to the space immediately surrounding the stud end, but it was realized that the confinement of the hot gases could not be too close to the immediate vicinity of the weld and that the confinement could not be complete. The improvement of the '204 patent was to provide the planar working face of the ferrule (4) with passages or recesses (18) that extend radially across the working face and which are spaced evenly there around. The passages or recesses (18) functioned to allow the hot gases formed at the moment of welding to escape through the vent passages (18), instead of blowing out and spattering hot metal in haphazard fashion from one side or the other (as might occur with the ferrule (18) of the '416 patent) with consequent disturbance of an even and complete fusing of the metal which is necessary to a good weld. The strength of the union is promoted by the effect of the vents in releasing and equalizing pressure within the chamber surrounding the weld.

U.S. Pat. No. 2,493,283, entitled "Ferrule For Welding", issued to Evans on Jan. 3, 1950. The '283 patent taught of a ferrule that did not have vents on the working face (10), but which allowed for the venting of heated gases through holes or passageways (14) provided through the wall (12) of the ceramic ferrule. The '283 patent taught that, while it was desirable to provide for venting, that the venting preferably did not occur at the edge of the ferrule as such a configuration would result in an irregular fillet when an even fillet was desired. The ferrule of the '283 patent, however still provides for a ferrule that does not have a continuous wall close to the weld site and, furthermore, the ferrule of the '283 patent would be extremely difficult (and thus costly) to produce. The tooling to press the powdered clay would need to have pins to create the vent channels, the pressing die would need to have multiple parts, the pins would need to be extended and retracted during the pressing operation, and the clay forming die would need to be split into an upper and lower section. The pins to create the vents through the wall of the ferrule would further interfere with the compaction of the clay.

U.S. Pat. No. 2,788,435, entitled "Ferrule", issued to Maras on Dec. 6, 1954. The '435 patent shows a ferrule (13) with teeth (21) for welding rectangular studs (14). The teeth (21) provide sufficient venting of gases formed during the existence of the weld are.

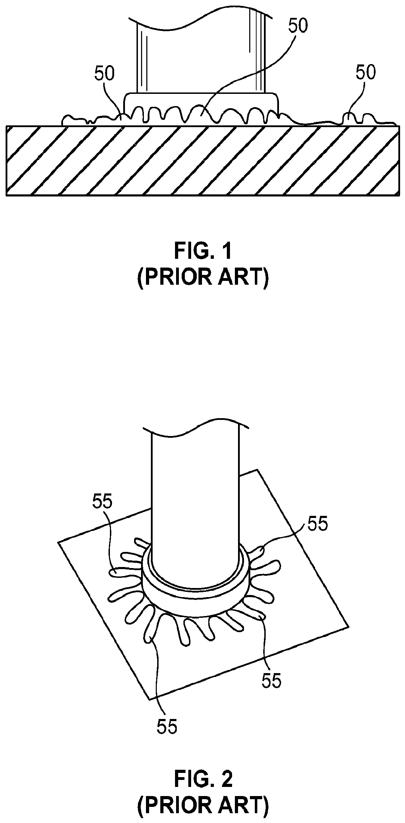

U.S. Pat. No. 3,004,139, entitled "Welding Stud And Ferrule Construction For Electrical Arc Welding", issued to Dash on Oct. 10, 1961. The '139 patent agreed with the '283 patent and taught that there were disadvantages to having passages or recesses in the working face of the ferrule. More specifically, the '139 patent indicated that while these passages or recesses did allow for the venting of gases, that they also allowed for the undesirable exit of excess weld metal. The exit of excess weld metal was often in the form of molten metal spatter which was not only a hazard to personnel, but was also a waste of weld metal. The excess metal could cause the ferrule to lift from the work piece which permitted molten metal to escape from underneath the ferrule and thus defeat the purpose of the ferrule (which was to confine the weld metal). Such escape of excess weld metal caused unsatisfactory welds. For instance, FIGS. 1 and 2 illustrate unsatisfactory welds due to the provision of vents in the working face of a ferrule, with FIG. 1 illustrating a welding operation that caused the formation of what are known in the art as weld berries 50 and FIG. 2 illustrating a welding operation that caused the formation of what are known in the art as spider legs 55 (both of which would need to be removed).

The solution of the '139 patent, like the '283 patent, was to remove the vents from the working face (31) of the ferrule (30), and instead to have the bore of the ferrule (30) at the neck portion (namely the opening (33) provided with a diameter substantially greater than the diameter of the stud (11). The opening (33) of the ferrule (30) thus permitted for the escape of gases therefrom, while all of the weld metal was practically confined to the chamber of the ferrule (30). The ferrule (30) of the '139 patent, however, sacrificed the ability to ensure the proper centering of the stud (11) relative to the ferrule (30) and the pool of molten weld metal contained therein.

U.S. Pat. No. 3,021,418, entitled "Stud-Welding Ferrule", issued to Van Den Blink et al. on Feb. 13, 1962. The '418 patent provides for the use of a ceramic ferrule (6) for stud welding without vents on the face. The ferrule (6) is used in conjunction with a stud (3), in which longitudinal grooves (4) are milled in a manner such that burrs (5) are formed around the surface fitting rather tightly in the annular ferrule body. The grooves and the spaces created by the burrs (5) between the inside diameter of the bore of the ferrule (6) and the outside diameter of the stud (3) would provide passages for venting of heated gas during the weld. The '418 patent, however, describes an interference fit between the ferrules (6) and the studs (3) caused by angle on one or the other rather than allowing for the back and forth movement of the stud (3) in the ferrule (6) that is needed for the stud welding process.

U.S. Pat. No. 3,182,173, entitled "Welding Stud And Ferrule Construction For Arc Welding", issued to Dash on May 4, 1965. The '173 patent provides further venting features in a ferrule. For instance, the '173 patent teaches that the cylindrical wall (19) of the ferrule chamber (24) (e.g., the portion of the ferrule (18) provided below the neck) may be provided with auxiliary vents to allow for the exit of gases. Alternatively, or conjunctively, the cylindrical wall (19) of the lower ferrule chamber (24) may be provided with internal vertical grooves (25) to allow for exit of gases out through the upper loose opening (22'). In each of the embodiments illustrated in the '173 patent, the top portion (21) of the ferrule (18) (e.g., the neck portion) is provided with a coaxial opening (22) that is substantially larger than the shank portion (11) of the stud (10) so that the latter can pass freely or loosely through the opening (22), and so that gases may easily exit the ferrule chamber (24). Thus, like the ferrule (30) of the '139 patent, the ferrule (18) of the '178 patent sacrifices the ability to ensure the proper centering of the stud (10) relative to the bore or chamber of the ferrule (18).

U.S. Pat. No. 3,291,438, entitled "Welding Ferrule", issued to Logan on Dec. 13, 1966. The '438 patent shows the use of a ceramic welding ferrule (10) with a lower edge having a plurality of supporting legs (26) having a first wall (30) and a second wall (31) that extend from the inner side wall (32) to the outer side wall (33) of the ferrule (10). The supporting legs (26) define slots or openings (36) through the lower bore portion (16). In addition to the vents going through the face, the ferrule (10) has a plurality of circumferentially spaced vents or V-shaped notches (23) in the wall of the upper bore (15) which extend axially the entire length of the upper bore (15). Thus, the '438 patent calls for the use of a plurality of vents (36) in the face of the ferrules (10) in conjunction with a plurality of grooves (23) in the neck of the ferrules (10).

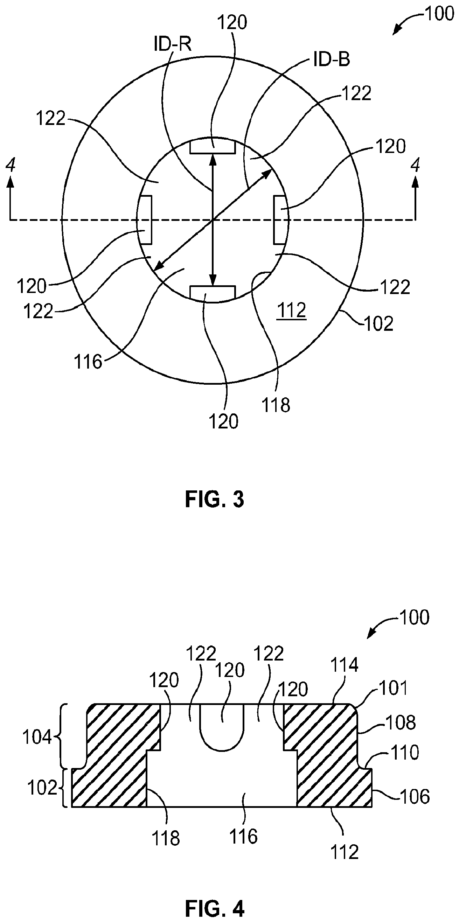

U.S. Pat. No. 4,117,297, entitled "Ferrule For Stud Welding", issued to Sholle on Sep. 26, 1978. The '297 patent shows a variety of ceramic ferrules all having notches for venting around a portion of the contact face and an absence of vents on the remainder of the contact face. The absence of vents on a portion of the contact face having the purpose of imposing imbalance to the weld are due to gravity when welding to vertical surfaces and magnetic arc blow due to edges, long parts and the location of ground connections or cables. The ferrules of the '297 patent could be positioned with the blocked vent or smaller cavity to oppose the direction of the blow. FIGS. 4-6 of the '297 patent all show ribs or projections (154, 172, 190) to center the stud in the upper passage (150, 168, 186) of the ferrules. The space created in the neck of the ferrules is credited for making up to some extent for the removal of vents from a portion of the face of the ferrule.

From GB 649 177 A, a refractory ferrule for stud welding is known, having three longitudinal ribs on an inner cylindrical surface of the ferrule according to the preamble of independent claim 1.

From GB 649 177 A also a method according to the preamble of claim 14 is known.

Other ferrules are also known in the art, but have been used in different types of welding operations.

The problem with the ferrules known in the art to date is that there has not been a ferrule which adequately allows for each of the following: (1) confinement of the weld metal to the specific diameter of the chamber of the ferrule; (2) venting of expanding heated gases during a welding operation; (3) centering of the stud relative to the ferrule; (4) elimination of a notch where the metal of the weld flash meets the base material that the stud is welded on; and (5) prevention of molten weld metal expelled during the weld. Thus, there is a need for a ferrule which overcomes the disadvantages and the deficiencies of all of the known prior art ferrules, especially as there has been a lack of improvements in ferrule technology as the most recent patented ferrule design (described in the '297 patent) is over thirty-five (35) years old. The combination of features disclosed in the present application provides for such a ferrule.

### BRIEF DESCRIPTION OF THE DRAWINGS

The organization and manner of the structure and operation of the invention, together with further objects and advantages thereof, may best be understood by reference to the following description, taken in connection with the accompanying drawings, wherein like reference numerals identify like elements in which:
FIG. 1 is a view of a welding operation using a prior art ferrule which allows for venting through a sidewall thereof, which results in the formation of what are known in the art as weld berries, which are undesirable and which would need to be removed;
FIG. 2 is a view of a welding operation using a prior art ferrule which allows for venting through a sidewall thereof, which results in the formation of what are known in the art as spider legs, which are undesirable and which would need to be removed.
FIG. 3 is a bottom view of a ferrule of a first embodiment of the invention;
FIG. 4 is a cross-sectional view of the ferrule of FIG. 3 taken along line 4-4;
FIGS. 5-8 are cross-sectional views of a neck venting welding operation using the ferrule of FIGS. 3 and 4;
FIG. 9 is a cross-sectional view of a modification to the ferrule of FIG. 3, where the ferrule has a curved (generally concave) working face;
FIG. 9A is a cross-sectional view of a modification to the ferrule of FIG. 3, similar to the modification illustrated in FIG. 9, but where the ferrule has a pair of angled working faces;
FIG. 10 is a cross-sectional view of a modification to the ferrule of FIG. 3, where the ferrule has a curved (generally convex) working face;
FIG. 10A is a cross-sectional view of a modification to the ferrule of FIG. 3, similar to the modification illustrated in FIG. 10, but where the ferrule has a pair of angled working faces;
FIG. 11 is a cross-sectional view of a modification to the ferrule of FIG. 3, where the ferrule has a cylindrical inner wall of a bore which is provided at a non-perpendicular angle relative to a working face of the ferrule;
FIG. 12 is a bottom view of a ferrule of a second embodiment of the invention;
FIG. 13 is a cross-sectional view of the ferrule of FIG. 12, taken along line 13-13;
FIG. 14 is a bottom view of a ferrule of a third embodiment of the invention;
FIG. 15 is a cross-sectional view of the ferrule of FIG. 14, taken along line 15-15;
FIG. 16 is a top view of the ferrule of FIG. 14;
FIG. 17 is a bottom view of a ferrule of a fourth embodiment of the invention;
FIG. 18 is a cross-sectional view of the ferrule of FIG. 17, taken along line 18-18;
FIG. 19 is a bottom view of a ferrule of a fifth embodiment of the invention;
FIG. 20 is a cross-sectional view of the ferrule of FIG. 19, taken along line 19-19;
FIG. 21 is a bottom view of a ferrule of a sixth embodiment of the invention;
FIG. 22 is a cross-sectional view of the ferrule of FIG. 21, taken along line 22-22; and
FIG. 23 is a cross-sectional view of a fully-threaded stud to be used in a neck venting welding operation with the ferrule of FIGS. 21 and 22.

### SUMMARY OF THE INVENTION

An embodiment of the invention provides a ferrule as defined by claim 1.

In a preferred embodiment, the bore of the ferrule has a circular cross-section with four ribs extending inwardly from the inner wall of the body proximate to the upper surface, with the four ribs defining four grooves. In an alternative preferred embodiment, the bore of the ferrule has a rectangular cross-section, which may be a square cross-section, with six ribs extending inwardly from the inner wall of the body proximate to the upper surface, with the six ribs defining six grooves.

In a preferred embodiment, the ferrule has the at least one rib extend downwardly from the upper surface toward the lower surface.

In a preferred embodiment, the bore is a stepped bore, the stepped bore having a diameter proximate to the lower surface which is larger than a diameter proximate to the upper surface.

In a preferred embodiment, the body has an upper, neck portion and a lower, base portion, the at least one rib and the at least one groove being provided in the upper, neck portion.

In a preferred embodiment, a plurality of ribs extend inwardly from the inner wall of the body proximate to the upper surface, the plurality of ribs defining an equal number of grooves.

In a preferred embodiment, each rib is equally spaced apart from an adjacent rib.

In a preferred embodiment, each rib has a lower end, wherein the lower ends are provided in a plane which is sloped relative to the lower surface. In a preferred embodiment, the rib which has a lower end which is positioned most proximate to the lower surface extends around at least half of a perimeter of the bore.

In a preferred embodiment, the lower surface is convex, concave, convex corner, or concave corner.

In a preferred embodiment, the bore is not perpendicular to the lower surface.

An embodiment of the invention provides a method as defined by claim 14.

A preferred embodiment of the invention provides a method of welding a stud to a work piece. The method comprises the steps of: a) providing a stud having an end; b) providing a work piece having a surface to which the end of the stud is to be welded; c) providing a ferrule having a body having an upper, neck portion and a lower, body portion, the upper neck portion defining an upper surface of the ferrule, the lower, base portion defining a lower surface of the ferrule, a bore extending through the body from the upper surface to the lower surface; d) centering the stud within the bore of the ferrule; e) positioning the lower surface of the ferrule to fit flush against the surface of the work piece; and f) welding the end of the stud to the surface of the work piece, whereby during the stud welding process, all the melted or molten weld material is confined to the bore of the ferrule and gases formed during the welding are vented out of the ferrule through the bore of the upper, neck portion.

In a preferred embodiment of the method, the stud has a non-threaded end portion, wherein the bore of the ferrule defines an inner wall of the body, and wherein the ferrule has at least one rib extending inwardly from the inner wall of the body proximate to the upper surface, the least one rib defining at least one groove, the non-threaded portion of the stud being centered within the bore of the ferrule, the gases formed during the welding being vented out of the ferrule through the at least one groove.

In a preferred embodiment of the method, the stud has a threaded end portion, the threaded end portion of the stud being centered within the bore of the ferrule, the gases formed during the welding being vented out of the ferrule between the threading of the threaded end portion of the stud.

### DETAILED DESCRIPTION OF THE ILLUSTRATED EMBODIMENTS

The following detailed description illustrates the invention by way of example and not by way of claimed limitation. This description will clearly enable one skilled in the art to make and use the claimed invention, and describes several embodiments, adaptations, variations, alternatives and uses of the claimed invention, including what is presently believed to be the best mode of carrying out the claimed invention. Additionally, it is to be understood that the claimed invention is not limited in its application to the details of construction and the arrangements of components set forth in the following description or illustrated in the drawings. The claimed invention is capable of other embodiments and of being practiced or being carried out in various ways. Also, it is to be understood that the phraseology and terminology used herein is for the purpose of description and should not be regarded as limiting.

A ferrule 100 of an embodiment not forming part of the invention is provided for use in a standard stud welding operation. The ferrule 100 is preferably formed of a ceramic material, but can alternatively be formed of any other suitable material. A preferred embodiment of the ferrule 100 is illustrated in FIGS. 3-8. As best illustrated in FIGS. 3 and 4, the ferrule 100 has a body 101 having a lower, base portion 102 and an upper, neck portion 104, each of which have outer side surfaces 106, 108, respectively. The outer side surface 106 has a diameter which is larger than a diameter of the outer side surface 108, such that a shoulder 110 is defined between the outer side surfaces 106, 108. The connection of the shoulder 110 to either the outer side surface 106 or the outer side surface 108 is preferably flat, but may be curved or angled, as desired.

The lower, base portion 102 has a planar working face 112. The planar working face 112 is configured to be positioned flush against a flat surface 185 of a work piece 180 during a welding operation. The upper, neck portion 104 has a planar face 114. The connection of the planar face 114 to the outer side surface 108 may be curved, if desired.

The ferrule 100 includes a bore 116 which extends through both the lower, base portion 102 and the upper, neck portion 104, from the planar working face 112 to the planar face 114. The bore 116 defines a cylindrical inner wall 118 of the ferrule 100. The bore 116 is commonly referred to as a straight bore. The cylindrical inner wall 118 preferably defines a constant inner diameter ID-B of the bore 116.

In an embodiment not forming part of the invention, the ferrule 100 includes a plurality of equidistantly spaced ribs 120 extending radially inwardly from the cylindrical inner wall 118 for a predetermined distance, thus defining an internal diameter ID-R of the ribs 120. Each rib 120 preferably extends downwardly from the planar face 114 toward the lower, base portion 102. While the ribs 120 are illustrated as extending downwardly to a position above where the neck portion 104 and the base portion 102 connect, it is to be understood that the ribs 120 could alternatively extend to a position where the neck portion 104 and the base portion 102 connect or to a position below where the neck portion 104 and the base portion 102 connect. The ribs 120, however, preferably do not extend all the way to the planar working face 112. If desired, upper ends of the ribs 120 could also be provided below the planar face 14. The presence of the ribs 120 provides for a groove 122 provided between adjacent ribs 120. FIG. 3 illustrates a most preferred embodiment of the ferrule 100, which has four ribs 120 and four corresponding grooves 122.

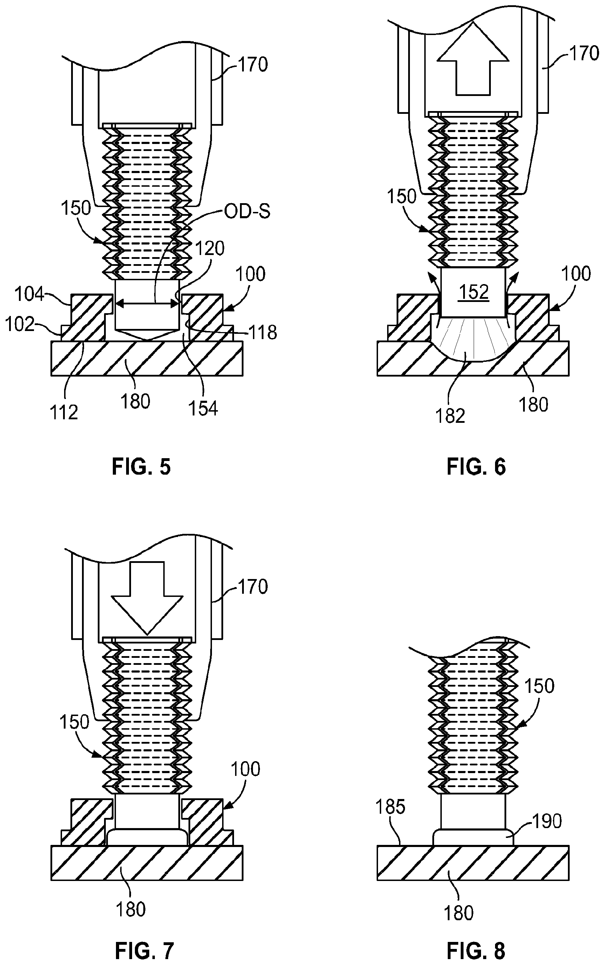

During a welding operation, and as illustrated in FIGS. 5-8, a stud 150 having a non-threaded end portion 152 is to be used in connection with the ferrule 100. The inner diameter ID-R of the ribs 120 is preferably configured to be substantially identical to, yet slightly bigger than, an outer diameter OD-S of the non-threaded end portion 152 of the stud 150. Thus, when a stud 150 is positioned within the ferrule 100, the ribs 120 act to center the stud 150 in place relative to the ferrule 100 in such a manner which ensures the proper positioning of the stud 150 relative to the ferrule 100 throughout the entire welding process (thereby ensuring the proper welding of the stud 150 to the work piece 180), but in a manner which also allows the freedom needed for the stud 150 to move back and forth, or up and down, within the ferrule 100 as is needed during the stud welding process. The ferrule 100 is preferably utilized in connection with studs 150 having non-threaded end portions 152 having an outer diameter OD-S of one-half inch or less.

The non-threaded end portion 152 of the stud 150 that is to be welded to a work piece 180 is positioned within the straight bore 116 of the lower, base portion 102 of the ferrule 100, such that a cavity or weld chamber 154 is formed below the ribs 120 and between the non-threaded end portion 152 of the stud 150 and the cylindrical inner wall 118 of the ferrule 100. As neither the planar working face 112 of the lower, base portion 102 of the ferrule 100 nor the cylindrical inner wall 118 are provided with any vents, recesses or passageways, all the melted weld material is confined to the weld chamber 154. The gases that are formed during a welding operation, however, are still allowed to exit or vent the weld chamber 154 through the grooves or vents 122 provided between the ribs 120, the non-threaded end portion 152 of the stud 150 and the cylindrical inner wall 118. The ferrule 100 allows for the consistent formation of a clean weld 190, as illustrated in FIG. 8, as compared to the welds formed by using ferrules of the prior art, for example those as illustrated in FIGS. 1 and 2.

The welding process using the ferrule 100 is illustrated in FIGS. 5-8. In FIG. 5, a gun 170, the stud 150, the ferrule 100, and the work piece 180 are all properly positioned. In FIG. 6, the gun 170 is activated and the stud 150 is lifted, creating an arc. In FIG. 7, the arcing period is completed and the stud 150 is plunged into a molten pool of metal 182 formed in the work piece 180 by the creation of the arc. In FIG. 8, the gun 170 is withdrawn from the welded stud 150 and the ferrule 100 is removed.

It is to be understood that, while the ferrule 100 preferably has a plurality of ribs 120 and grooves 122, that in certain situations, the ferrule 100 may be provided with a single rib 120 and a single groove 122 which is provided between opposite ends of the single rib 120. Such a ferrule 100 could be utilized so long as the single groove 122 is small enough to prevent the stud 150 from moving therein, thereby ensuring the proper centering of the stud 150 by the single rib 120, but still allowing for the venting of gases through the single groove 122.

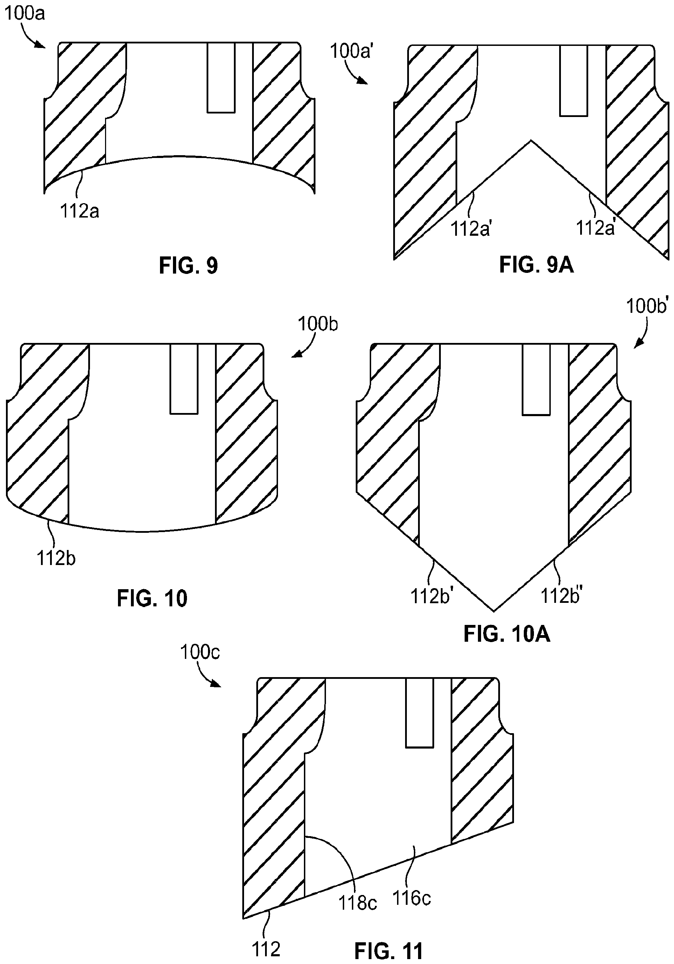

The ferrule 100 may have slight modifications to it as well, as illustrated in FIGS. 9-11. FIG. 9 illustrates a ferrule 100a which does not have a planar working face 112, but rather has a curved (generally concave) working face 112a which is configured to be used with work pieces that are not flat, such as the outsides of round bars or pipes. FIG. 9A illustrates a ferrule 100a' having a modified concave working face 112a' which is configured to be used for welding to ninety degree outside corners of a work piece, which is referred to as a concave corner working face. FIG. 10 illustrates a ferrule 100b which does not have a planar working face 112, but rather has a curved (generally convex) working face 112b which is configured to be used with work pieces that are not flat, such as the insides of pipes or fillets in corners of angles. FIG. 10A illustrates a ferrule 100b' having a modified convex working face 112b' which is configured to be used for welding into ninety degree inside corners of a work piece, which is referred to as a convex corner working face. FIG. 11 illustrates a ferrule 100c which does have a planar working face 112, but which provides for the cylindrical inner wall 118c of the bore 116c to be provided at a non-perpendicular angle (like that of ferrule 100) relative to the planar working face 112.

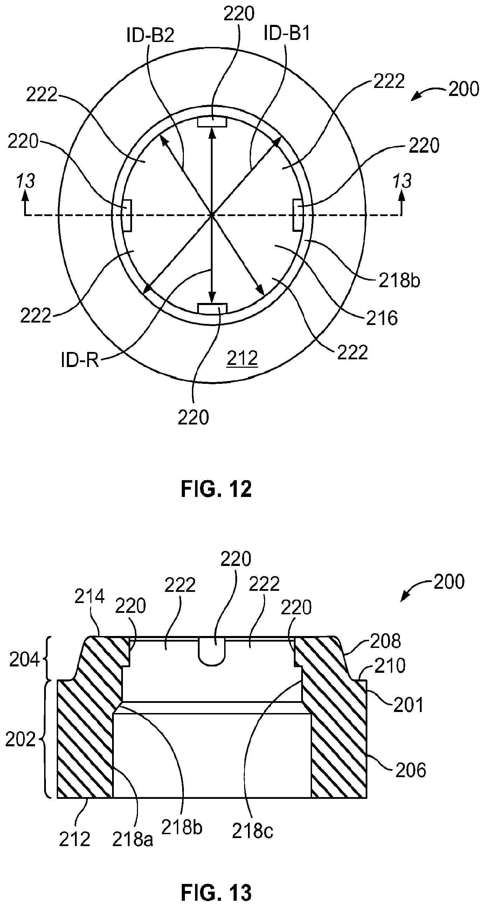

A ferrule 200 of another embodiment not forming part of the invention is provided for use in a standard stud welding operation. The ferrule 200 is preferably formed of a ceramic material, but can alternatively be formed of any other suitable material. A preferred embodiment of the ferrule 200 is illustrated in FIGS. 12 and 13. As best illustrated in FIGS. 12 and 13, the ferrule 200 has a body 201 having a lower, base portion 202 and an upper, neck portion 204, each of which have outer side surfaces 206, 208, respectively. The outer side surface 206 has a diameter which is larger than a diameter of the outer side surface 208, such that a shoulder 210 is defined between the outer side surfaces 206, 208. The outer side surface 208 is illustrated as being angled, but may be curved or straight, as desired. The connection of the shoulder 210 to either the outer side surface 206 or the outer side surface 208 is preferably flat, but may be curved or angled, as desired.

The lower, base portion 202 has a planar working face 212. The planar working face 212 is configured to be positioned flush against a flat surface 185 of a work piece 180 during a welding operation. The upper, neck portion 204 has a planar face 214. The connection of the planar face 214 to the outer side surface 208 may be curved, if desired.

The ferrule 200 includes a bore 216 which extends through both the lower, base portion 202 and the upper, neck portion 204, from the planar working face 212 to the planar face 214. The bore 216 defines a first cylindrical inner wall 218a of the ferrule 200, a conical inner wall 218b of the ferrule 200, and a second cylindrical inner wall 218c of the ferrule 200. The bore 216 is commonly referred to as a stepped bore. The first cylindrical inner wall 218a preferably defines a constant inner diameter ID-B1 of the bore 216 and the second cylindrical inner wall 218c preferably defines a constant inner diameter ID-B2 of the bore 216, where ID-B1 is larger than ID-B2. The conical inner wall 218b connects the first cylindrical inner wall 218a to the second cylindrical inner wall 218c. The connection between the conical inner wall 218b and the second cylindrical inner wall 218c is preferably provided below the shoulder 210.

In an embodiment not forming part of the invention, the ferrule 200 includes a plurality of equidistantly spaced ribs 220 extending radially inwardly from the second cylindrical inner wall 218c for a predetermined distance, thus defining an internal diameter ID-R of the ribs 220. Each rib 220 preferably extends downwardly from the planar face 214 toward the base portion 202. While the ribs 220 are illustrated as extending downwardly to a position above where the neck portion 204 and the base portion 202 connect, it is to be understood that the ribs 220 could alternatively extend to a position where the neck portion 204 and the base portion 202 connect or to a position below where the neck portion 204 and the base portion 202 connect. The ribs 220, however, preferably do not extend all the way to the planar working face 212, and preferably do not also extend to either the conical inner wall 218b or the first cylindrical inner wall 218a. If desired, upper ends of the ribs 220 could also be provided below the planar face 214. The presence of the ribs 220 provides for a groove 222 provided between adjacent ribs 220. FIG. 13 illustrates a most preferred embodiment of the ferrule 200, which has four ribs 220 and four corresponding grooves 222.

During a welding operation (not illustrated, but understood to be comparable to the welding operation illustrated in FIGS. 5-8 in connection with ferrule 100), a stud (not shown) is to be used in connection with the ferrule 200. The inner diameter ID-R of the ribs 220 is preferably configured to be substantially identical to, yet slightly bigger than, an outer diameter of the stud. Thus, when the stud is positioned within the ferrule 200, the ribs 220 act to center the stud in place relative to the ferrule 200 in such a manner which ensures the proper positioning of the stud relative to the ferrule 200 throughout the entire welding process (thereby ensuring the proper welding of the stud to the work piece (not shown)), but in a manner which also allows for the freedom needed for the stud to move back and forth within the ferrule 200 as is needed during the stud welding process. The ferrule 200 is preferably utilized in connection with studs having an outer diameter of more than one-half inch.

A non-threaded end portion of the stud that is to be welded to a work piece is positioned within the stepped bore 216 of the lower, base portion 202 of the ferrule 200, such that a cavity or weld chamber (not shown) is formed below the ribs 220 and between the stud and the inner walls 218a, 218b, 218c of the ferrule 200. As neither the planar working face 212 of the lower, base portion 202 of the ferrule 200 nor the inner walls 218a, 218b, 218c are provided with any vents, recesses or passageways, all the melted weld material is confined to the weld chamber. The gases that are formed during a welding operation, however, are still allowed to exit or vent the weld chamber through the grooves or vents 222 provided between the ribs 220, the stud and the second cylindrical inner wall 218c. The ferrule 200 allows for the consistent formation of a clean weld, as compared to the welds formed by using ferrules of the prior art, for example those as illustrated in FIGS. 1 and 2.

It is to be understood that the ferrule 200 could be modified in similar manner to the modifications of the ferrule 100, as discussed above.

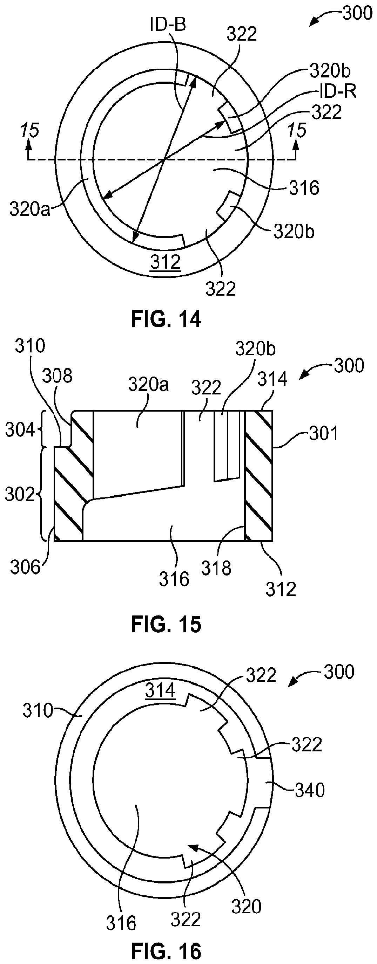

A ferrule 300 of a preferred embodiment of the invention is provided for use in a vertical stud welding operation where directional venting is required. The ferrule 300 is preferably formed of a ceramic material, but can alternatively be formed of any other suitable material. A preferred embodiment of the ferrule 300 is illustrated in FIGS. 14-16. The ferrule 300 has a body 301 having a lower, base portion 302 and an upper, neck portion 304, each of which have outer side surfaces 306, 308, respectively. The outer side surface 306 has a diameter which is larger than a diameter of the outer side surface 308, such that a shoulder 310 is defined between the outer side surfaces 306, 308. The connection of the shoulder 310 to either the outer side surface 306 or the outer side surface 308 is preferably flat, but may be curved or angled, as desired. Due to the ferrule 300 being used for vertical welding (e.g., welding to a sidewall), the shoulder 310 is not provided continuously about the circumference of the ferrule 300, but rather a portion of the outer side surface 308 of the upper, neck portion 304 is provided to extend straight up from the outer side surface 306 of the lower, base portion 302, so as to define an orientation key 340 for the ferrule 300, as illustrated in FIG. 16.

The lower, base portion 302 has a planar working face 312. The planar working face 312 is configured to be positioned flush against a flat surface 390 of a work piece (not shown) (which is preferably a sidewall or the like) during a welding operation. The upper, neck portion 304 has a planar face 314. The connection of the planar face 314 to the outer side surface 308 may be curved, if desired.

The ferrule 300 includes a bore 316 which extends through both the lower, base portion 302 and the upper, neck portion 304, from the planar working face 312 to the planar face 314. The bore 316 defines a cylindrical inner wall 318 of the ferrule 300. The bore 316 is commonly referred to as a straight bore. The cylindrical inner wall 318 preferably defines a constant inner diameter ID-B of the bore 316.

In the preferred embodiment, the ferrule 300 includes a plurality of ribs 320 extending radially inwardly from the cylindrical inner wall 318 for a predetermined distance, thus defining an internal diameter ID-R of the ribs 320. Each rib 320 preferably extends downwardly from the planar face 314 toward the lower, base portion 302. While the ribs 320 are illustrated as extending downwardly to a position below where the neck portion 304 and the base portion 302 connect, it is to be understood that the ribs 320 could alternatively extend to a position where the neck portion 304 and the base portion 302 connect or to a position above where the neck portion 304 and the base portion 302 connect. The ribs 320, however, preferably do not extend all the way to the planar working face 312. If desired, upper ends of the ribs 320 could also be provided below the planar face 314. The presence of the ribs 320 provides for a groove 322 provided between adjacent ribs 320. FIG. 14 illustrates a most preferred embodiment of the ferrule 300, which has three ribs 320 and three corresponding grooves 322.

Unlike the ribs 120, 220 of the ferrules 100, 200, the ribs 320 are not all of the same size and are not equidistantly spaced apart from one another. Rather, one of the ribs 320a is of a C-shaped configuration and extends about one-hundred degrees about the bore 116. The other two ribs 320b are then equidistantly spaced from the ends of the rib 320a and from each other, as is illustrated in FIG. 14. Thus, this provides for three grooves 322, all of which are provided on one side of the ferrule 300. This configuration allows for directional venting during a vertical welding operation, as will be discussed in further detail herein. Also unlike the ribs 120, 220 of the ferrules 100, 200, the ribs 320 of the ferrule 300 have lower ends which are sloped/angled, with the end of the rib 320a being positioned below the ends of the ribs 320b, as illustrated in FIG. 15.

During a welding operation (not illustrated, but understood to be comparable to the welding operation illustrated in FIGS. 5-8 in connection with ferrule 100), a stud (not shown) is to be used in connection with the ferrule 300. The inner diameter ID-R of the ribs 320 is preferably configured to be substantially identical to, yet slightly bigger than, an outer diameter of the non-threaded end portion of the stud. Thus, when the stud is positioned within the ferrule 300, the ribs 320 act to center the stud in place relative to the ferrule 300 in such a manner which ensures the proper positioning of the stud relative to the ferrule 300 throughout the entire welding process (thereby ensuring the proper welding of the stud to the work piece (not shown)), but in a manner which also allows for the stud to move back and forth within the ferrule 300 as is needed for a stud welding process.

The non-threaded end portion of the stud that is to be vertically welded to a work piece, such as a sidewall, is positioned within the straight bore 316 of the lower, base portion 302 of the ferrule 300, such that a cavity or weld chamber is formed next to the ribs 320 and between the stud and the cylindrical inner wall 318 of the ferrule 300. As neither the planar working face 312 of the lower, base portion 302 of the ferrule 300 nor the cylindrical inner wall 318 are provided with any vents, recesses or passageways, all the melted weld material is confined to the weld chamber. The gases that are formed during a welding operation, however, are still allowed to exit or vent the weld chamber through the grooves or vents 322 provided between the ribs 320, the stud and the cylindrical inner wall 318. The ferrule 300 allows for the consistent formation of a clean weld, as compared to the welds formed by using ferrules of the prior art, for example those as illustrated in FIGS. 1 and 2.

As the ferrule 300 is preferably used in connection with a vertical welding operation, the ferrule 300 is provided with the orientation key 340 so that the orientation key 340 is always positioned at the top end of the ferrule 300 when in operation. With the orientation key 340 in this position, the weld chamber, due to the sloped ends of the ribs 320a, 320b, has a smaller volume at its bottom than it does at its top. The grooves 322 are also provided at a top end of the ferrule 300, proximate to the orientation key 340, so as to ensure that the weld flash/molten metal formed during the welding process do not exit out of the ferrule 300, and further to ensure that the gases formed during the welding operation are still allowed to vent out of the weld chamber.

It is to be understood that the ferrule 300 could be modified in similar manner to the modifications of the ferrule 100, as discussed above.

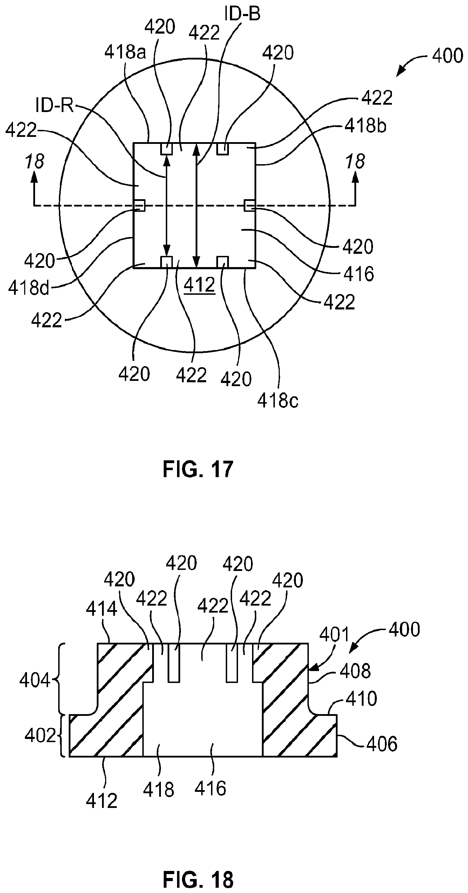

A ferrule 400 of another embodiment of the invention is provided for use in a standard square stud welding operation. The ferrule 400 is preferably formed of a ceramic material, but can alternatively be formed of any other suitable material. A preferred embodiment of the ferrule 400 is illustrated in FIGS. 17 and 18. The ferrule 400 has a body 401 having a lower, base portion 402 and an upper, neck portion 404, each of which have outer side surfaces 406, 408, respectively. The outer side surface 406 has a diameter which is larger than a diameter of the outer side surface 408, such that a shoulder 410 is defined between the outer side surfaces 406, 408. The connection of the shoulder 410 to either the outer side surface 406 or the outer side surface 408 is preferably flat, but may be curved or angled, as desired.

The lower, base portion 402 has a planar working face 412. The planar working face 412 is configured to be positioned flush against a flat surface of a work piece (not shown) during a welding operation. The upper, neck portion 404 has a planar face 414. The connection of the planar face 414 to the outer side surface 408 may be curved, if desired.

The ferrule 400 includes a bore 416 which extends through both the lower, base portion 402 and the upper, neck portion 404, from the planar working face 412 to the planar face 414. The bore 416 has a square cross-section and thus defines an inner wall 418 of the ferrule 400 which is defined by four inner walls 418a, 418b, 418c, 418d, with walls 418a and 418c being opposite of one another and walls 418b and 418d being opposite one another. A straight line distance from wall 418a to wall 418c is identical to a straight line distance from wall 418b to wall 418d, thus defining an inner wall straight line distance ID-B of the bore 416.

In a preferred embodiment, the ferrule 400 includes a plurality of spaced ribs 420 extending inwardly from the inner wall 418 for a predetermined distance. The walls 418a, 418c preferably have two ribs 420 extending inwardly therefrom, while the walls 418b, 418d preferably have a single rib 420 extending inwardly therefrom. The straight line distance from opposite ribs 420 is identical and defines a straight line distance ID-R of the ribs 420. Each rib 420 preferably extends downwardly from the planar face 414 toward the lower, base portion 402. While the ribs 420 are illustrated as extending downwardly to a position above where the neck portion 404 and the base portion 402 connect, it is to be understood that the ribs 420 could alternatively extend to a position where the neck portion 404 and the base portion 402 connect or to a position below where the neck portion 404 and the base portion 402 connect. The ribs 420, however, preferably do not extend all the way to the planar working face 412. If desired, upper ends of the ribs 420 could also be provided below the planar face 414. The presence of the ribs 420 provides for a groove 422 provided between adjacent ribs 420. FIG. 17 illustrates a most preferred embodiment of the ferrule 400, which has six ribs 420 and six corresponding grooves 422.

During a welding operation (not illustrated), a square stud (not shown) having a non-threaded end portion is to be used in connection with the ferrule 400. The straight line distance ID-R of the ribs 420 is preferably configured to be substantially identical to, yet slightly bigger than, an outer perimeter of the non-threaded end portion of the stud. Thus, when the square stud is positioned within the ferrule 400, the ribs 420 act to center the square stud in place relative to the ferrule 400 in such a manner which ensures the proper positioning of the square stud relative to the ferrule 400 throughout the entire welding process (thereby ensuring the proper welding of the square stud to the work piece), but in a manner which also allows for the freedom needed for the square stud to move back and forth within the ferrule 400 as is needed during the stud welding process.

The non-threaded end portion of the square stud that is to be welded to a work piece is positioned within the straight squared bore 416 of the lower, base portion 402 of the ferrule 400, such that a cavity or weld chamber (not shown) is formed below the ribs 420 and between the non-threaded end portion of the square stud and the inner wall 418 of the ferrule 400. As neither the planar working face 412 of the lower, base portion 402 of the ferrule 400 nor the inner wall 418 are provided with any vents, recesses or passageways, all the melted weld material is confined to the weld chamber. The gases that are formed during a welding operation, however, are still allowed to exit or vent the weld chamber through the grooves or vents 422 provided between the ribs 420, the non-threaded end portion of the square stud and the inner wall 418. The ferrule 400 allows for the consistent formation of a clean weld, as compared to the welds formed by using ferrules of the prior art, for example those as illustrated in FIGS. 1 and 2.

It is to be understood that the ferrule 400 could be modified in similar manner to the modifications of the ferrule 100, as discussed above.

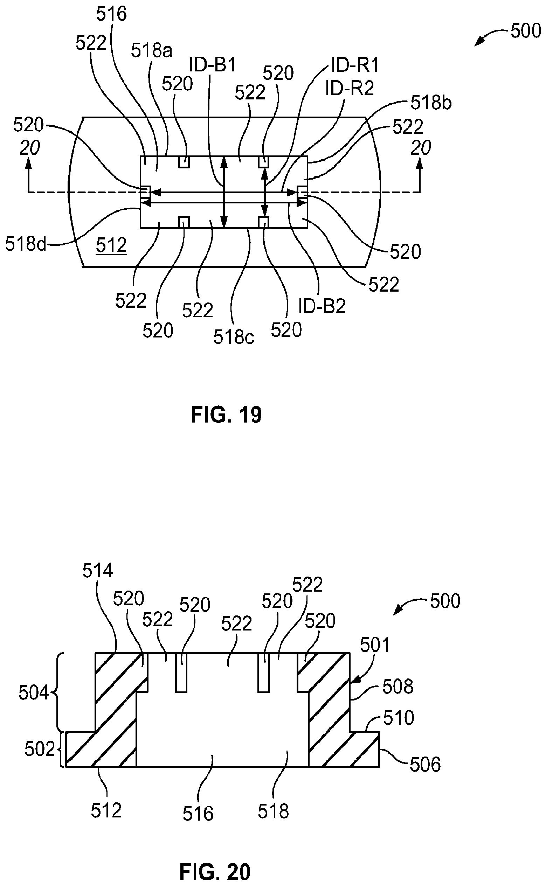

A ferrule 500 of another embodiment of the invention is provided for use in a standard rectangular stud welding operation. The ferrule 500 is preferably formed of a ceramic material, but can alternatively be formed of any other suitable material. A preferred embodiment of the ferrule 500 is illustrated in FIGS. 19 and 20. The ferrule 500 has a body 501 having a lower, base portion 502 and an upper, neck portion 504, each of which have outer side surfaces 506, 508, respectively. The outer side surface 506 has a perimeter which is larger than a perimeter of the outer side surface 508, such that a shoulder 510 is defined between the outer side surfaces 506, 508. The connection of the shoulder 510 to either the outer side surface 506 or the outer side surface 508 is preferably flat, but may be curved or angled, as desired.

The lower, base portion 502 has a planar working face 512. The planar working face 512 is configured to be positioned flush against a flat surface of a work piece (not shown) during a welding operation. The upper, neck portion 504 has a planar face 514. The connection of the planar face 514 to the outer side surface 508 may be curved, if desired.

The ferrule 500 includes a bore 516 which extends through both the lower, base portion 502 and the upper, neck portion 504, from the planar working face 512 to the planar face 514. The bore 516 has a rectangular cross-section and thus defines an inner wall 518 of the ferrule 500 which is defined by four inner walls 518a, 518b, 518c, 518d, with walls 518a and 518c being opposite of one another and walls 518b and 518d being opposite one another. Walls 518a and 518c have a length which is larger than a length of walls 518b and 518d. A straight line distance from wall 518a to wall 518c is thus less than a straight line distance from wall 518b to wall 518d, thus defining first and second inner wall straight line distance ID-B1 and ID-B2 of the bore 516.

In a preferred embodiment, the ferrule 500 includes a plurality of spaced ribs 520 extending inwardly from the inner wall 518 for a predetermined distance. The longer walls 518a, 518c preferably have two ribs 520 extending inwardly therefrom, while the shorter walls 518b, 518d preferably have a single rib 520 extending inwardly therefrom. The straight line distance from opposite ribs 520 on the long walls 518a, 518c is thus less than a straight line distance from opposite ribs 520 on the short walls 518b, 518d, thus defining first and second straight line distances ID-R1 and ID-R2 of the ribs 520. Each rib 520 preferably extends downwardly from the planar face 514 toward the lower, base portion 502. While the ribs 520 are illustrated as extending downwardly to a position above where the neck portion 504 and the base portion 502 connect, it is to be understood that the ribs 520 could alternatively extend to a position where the neck portion 504 and the base portion 502 connect or to a position below where the neck portion 504 and the base portion 502 connect. The ribs 520, however, preferably do not extend all the way to the planar working face 512. If desired, upper ends of the ribs 520 could also be provided below the planar face 514. The presence of the ribs 520 provides for a groove 522 provided between adjacent ribs 520. FIG. 19 illustrates a most preferred embodiment of the ferrule 500, which has six ribs 520 and six corresponding grooves 522.

During a welding operation (not illustrated), a rectangular stud (not shown) having a non-threaded end portion is to be used in connection with the ferrule 500. The first and second straight line distances ID-R1 and ID-R2 of the ribs 520 are preferably configured to be substantially identical to, yet slightly bigger than, an outer perimeter of the non-threaded end portion of the rectangular stud. Thus, when the rectangular stud is positioned within the ferrule 500, the ribs 520 act to center the rectangular stud in place relative to the ferrule 500 in such a manner which ensures the proper positioning of the rectangular stud relative to the ferrule 500 throughout the entire welding process (thereby ensuring the proper welding of the rectangular stud to the work piece), but in a manner which also allows for the freedom needed for the rectangular stud to move back and forth within the ferrule 500 as is needed during the stud welding process.

The non-threaded end portion of the rectangular stud that is to be welded to a work piece is positioned within the straight rectangular bore 516 of the lower, base portion 502 of the ferrule 500, such that a cavity or weld chamber (not shown) is formed below the ribs 520 and between the non-threaded end portion of the rectangular stud and the inner wall 518 of the ferrule 500. As neither the planar working face 512 of the lower, base portion 502 of the ferrule 500 nor the inner wall 518 are provided with any vents, recesses or passageways, all the melted weld material is confined to the weld chamber. The gases that are formed during a welding operation, however, are still allowed to exit or vent the weld chamber through the grooves or vents 522 provided between the ribs 520, the non-threaded end portion of the rectangular stud and the inner wall 518. The ferrule 500 allows for the consistent formation of a clean weld, as compared to the welds formed by using ferrules of the prior art, for example those as illustrated in FIGS. 1 and 2.

It is to be understood that the ferrule 500 could be modified in similar manner to the modifications of the ferrule 100, as discussed above.

A lack of improvements in ferrule technology over the last thirty-five plus years has created long-growing dissatisfaction with the face vented ferrules of the prior art used for the stud welding process. Thus, the ferrules 100, 200, 300, 400, 500 provide a significant number of advantages over the face vented ferrules of the prior art.

Elimination of the workface vents going through the wall of the ferrules results in the following improvements and benefits with respect to formation of the weld flash. Since the ferrules 100, 200, 300, 400, 500 have no vents in the face, the ferrules of the invention eliminate the irregular saw tooth pattern of weld metal around the weld and weld berries (see FIG. 1) and spider legs (see FIG. 2) extending from the vents are also eliminated, as is the need to mechanically remove excess weld metal to assure that a mating part will fit over the weld flash. The solid unvented wall of the ferrules of the invention produce stud welds having a more attractive weld appearance than that of a face vented ferrule. The diameter of the weld flash is a smooth surface with a diameter that is precisely controlled by the diameter of the weld chamber cavity in the ferrule. The consistent diameter and shape of the weld metal assures consistent fit up with holes in the mating parts that go over the welds and they reduce the diameter of the counterbore holes that are needed to fit over the welds. Due to the solid uninterrupted wall of the ferrule chamber, the welds made using the ferrules of the invention have a smooth blend of the melted weld metal into the base material, e.g, the work piece. This superior peripheral edge fusion of the weld flash blend with the base material eliminates a stress crack initiation site which improves the axial and lateral cyclic fatigue loading life expectancy of the welds. The cost of the machining operations needed to make the tooling used to press the ceramic material into ferrules of the invention are greatly simplifying and less expensive than those needed to make the tooling used to form face vented ferrules of the prior art. The life expectancy of the tooling in production for the neck vented thermal ferrules of the invention is also greatly extended over the tooling life of the face vented ferrule tooling due to less displacement of the ceramic and less abrasion.

In addition, the improved weld appearance and dimensional control of the ferrules of the invention also lower the energy cost to make stud welds. The reduction in energy is the result of having a solid wall in the weld chamber of the ferrules. Elimination of the vents going through the wall of the ferrules prevents the loss of weld heat and molten weld metal during the stud welding process. Ferrules of the prior art were produced with vents that had vent openings of sixty degrees and ninety degrees. It was observed and known that ferrules having the larger, more open ninety degree vents required hotter weld settings than were needed to properly weld using ferrules having sixty degree vents. Use of the neck vented thermal ferrules of the invention do a better job of shielding the weld arc than do face vented ferrules. Concentration of the weld energy without loss from face vent results in energy savings, a reduction in the cost of welding, and an increase in the area of fusion. Energy reductions of 10 to 15% have been used with the neck vented thermal ferrules of the invention with no reduction in weld quality, strength or reliability.

The ferrules 100, 200, 300, 400, 500 all provide for the venting of gases through grooves 122, 222, 322, 422, 522 defined in the neck portions 104, 204, 304, 404, 504 of the bores 116, 216, 316, 416, 516. In other words, neck venting is allowed by the ferrules 100, 200, 300, 400, 500. The ferrules 100, 200, 300, 400, 500, while allowing for this neck venting, also have the added feature of being able to properly center a non-threaded end portion 152 of a stud 150 with the use of the ribs 120, 220, 320, 420, 520 provided in the neck portions 104, 204, 304, 404, 504 of the bores 116, 216, 316, 416, 516.

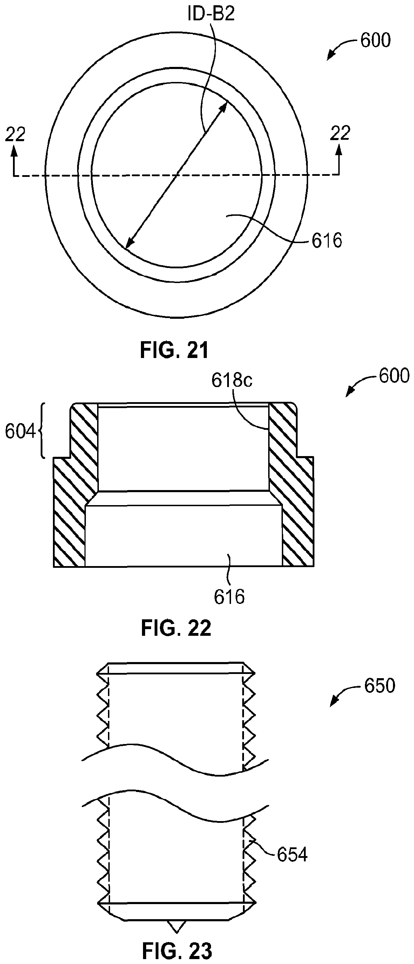

With the realization of the benefits of neck venting, which had heretofore never been fully realized or achieved, as advancements in the art of ferrules has essentially been non-existent for a number of decades, the invention provides further benefits in connection with a neck venting process. More specifically, currently the welding of studs in use with ferrules has been limited to studs having non-threaded end portions which are configured to be positioned within the bore of the ferrule, and with threaded portions of the stud being provided outside of the bore of the ferrule. However, with the understanding of the benefits of neck venting, the invention further includes neck venting in connection with fully threaded studs, as will be described below with reference to FIGS. 21-23.

As illustrated in FIGS. 21 and 22, a prior art ferrule 600 is provided. The ferrule 600 is essentially identical to the ferrule 200, with the exception that the ferrule 600 does not include the novel aspect of providing ribs in the neck portion 604 of the bore 616 for centering and venting purposes, as described hereinabove.

As illustrated in FIG. 23, a fully-threaded stud 650 is provided. The stud 650 has threading 654 defining both a major thread diameter and a minor thread diameter, where the major thread diameter is larger than the minor thread diameter.

In a welding operation, the fully-threaded stud 650 would be positioned within the bore 616 of the ferrule 600 in a manner similar to that described above with regard to the other ferrules 100, 200, 300, 400, 500. The ferrule 600, however, is not provided with any ribs which, in the other ferrules, are used to allow for venting and for centering of the stud. In this case, the major thread diameter would be provided to be almost identical to, but slightly smaller than, the constant inner diameter ID-B2 of the second cylindrical inner wall 618c. Thus, the centering of the stud 650 is provided by the major thread diameter of the stud 650 itself. Furthermore, due to the configuration of the threading 654 on the stud 650, the threading 654 on the stud 650 does not take up all of the space between the second cylindrical inner wall 618c and the minor thread diameter of the stud 650. The space between the stud 650 and the ferrule 600 has sufficient area to allow for the neck venting of gases during the stud welding operation, the benefits of which have previously been described.

It should be understood that while the ferrules 100, 200, 300, 400, 500, 600 are all described and illustrated as having lower, base portions 102, 202, 302, 402, 502, 602 and upper, neck portions 104, 204, 304, 404, 504, 604 that are separated from one another by a shoulder 110, 210, 310, 410, 510, 610, that the upper, neck portions 104, 204, 304, 404, 504, 604 could instead be continuous with the lower, base portions 102, 202, 302, 402, 502, 602, such that the shoulders 110, 210, 310, 410, 510, 610 are not provided in the ferrules 100, 200, 300, 400, 500, 600. Thus, while the use of the term "neck" when referring to the upper portion gives the indication of a reduced diameter/perimeter portion, it is to be understood that the term "neck" should not be construed in this limiting matter in the present application, but rather that the term "neck" of the ferrule is just to be considered the upper portion of the ferrule.

Thus, as it can been seen, there are a number of variations/modifications that can be made to the ferrules of the invention, but which each still provide for the desired advantages over the prior art ferrules. It should further be understood that the use of the terms ribs and grooves should not be considered to be limiting in any manner, but rather are just meant to be representative terms used to describe the ferrules of the invention.

While preferred embodiments of the invention are shown and described, it is envisioned that those skilled in the art may devise various modifications of the invention without departing from the scope of the invention, as defined by the claims.

## Claims

1. A ferrule (300) comprising:
a body (301) having upper and lower surfaces (314,0 312) and a bore (316) extending therethrough from the upper surface (314) to the lower surface (312), the bore (316) defining an inner wall (318) of the body (301), the lower surface (312) configured to fit flush against a surface of a workpiece to which a stud is to be welded; and
a plurality of ribs (320) extending inwardly from the inner wall (318) of the body (301) proximate to the upper surface (314)
**characterized in that**
the plurality of ribs (320) are not all of the same size and are disposed non-equidistantly around the
inner wall of the bore, the plurality of ribs (320) defining grooves (322), with each groove (322) extending between adjacent ribs (320),
wherein during a welding operation, the plurality of ribs (320) are configured to center the stud within the ferrule (300) and wherein the plurality of grooves (322) are configured to allow gases formed during the welding operation to vent out of the ferrule.

2. The ferrule as defined in claim I, wherein the bore (316) has a circular cross-section.

3. The ferrule as defined in claim 1, wherein the plurality of ribs (320) extend downwardly from the upper surface (314) toward the lower surface (312).

4. The ferrule as defined in any preceding claim, wherein the bore (318) is a stepped bore, the stepped bore having a diameter proximate to the lower surface (312) which is larger than a diameter proximate to the upper surface (314).

5. The ferrule as defined in any preceding claim, wherein the body (301) has an upper, neck portion (304) and a lower, base portion (302) and the plurality of ribs (320) and the plurality of grooves (322) are provided in the upper neck portion (304).

6. The ferrule as defined in claim 1, wherein each rib has a lower end, wherein the lower ends are provided in a plane which is sloped relative to the lower surface and, optionally or preferably, wherein the rib (320a) which has a lower end which is positioned most proximate to the lower surface (312) extends around at least half of a perimeter of the bore (318).

7. The ferrule as defined in any preceding claim, wherein;
the lower surface (312) is convex, or
the lower surface (312) is concave, or
the lower surface (312) is a concave corner, or
the lower surface (312) is a convex corner.

8. The ferrule as defined in any preceding claim, wherein the bore (318) is not perpendicular to the lower surface (312).

9. The ferrule as defined in claim 1, wherein at least one of the plurality of ribs (320) having a size being different than the other ones of the plurality of ribs (320).

10. The ferrule as defined in claim 9, wherein the at least one of the differently sized plurality of ribs (320a) being C-shaped and the other ones of the plurality of ribs (320b) being equidistantly spaced between the C-shaped rib.

11. The ferrule as defined in claim 10, wherein the C-shaped rib (320a) extends around approximately 100 degrees of the bore (318).

12. The ferrule as defined in claim 10, wherein the body (301) defines an orientation key (340) disposed adjacent the other ones of the plurality of ribs (320b) for allowing the other ones of the plurality of ribs (320b) to be positioned at a top end of the ferrule (300) during a vertical welding operation.

13. The ferrule as defined in claim 12, further comprising:
the body (301) having a lower, base portion (302) disposed adjacent the lower surface (312) and an upper, neck portion (304) disposed adjacent the upper surface (314);
the upper neck portion (304) having an upper outer diameter being greater than a lower outer diameter of the lower base portion (302) to define a shoulder (310) disposed between the lower, base portion (302) and the upper, neck portion (304), and
the shoulder (310) extending non-continuously around an outer circumference of the ferrule to define the orientation key (340).

14. A method of welding a stud to a work piece, the method comprising the steps of:
a) providing a stud having a non-threaded end portion and an end;
b) providing a work piece having a surface to which the end of the stud is to be welded;
c) providing a ferrule (300) having a body (301) having upper and lower surfaces (314, 312) and a bore (316) extending therethrough from the upper surface (314) to the lower surface (312), the bore (316) defining an inner wall (318) of the body (301), the ferrule further having a plurality of ribs (320) extending inwardly from the inner wall (316) of the body proximate to the upper surface (314),
**characterized in that**
the ribs (320) are not all of the same size and disposed non-equidistantly around the inner wall (316) of the bore (318), the plurality of ribs (320) defining grooves (322), with each groove (322) extending between adjacent ribs (320) ;
d) positioning the non-threaded end portion of the stud within the bore (318) of the ferrule (300), the plurality of ribs (320) of the ferrule ensuring the stud is centered within the ferrule (300);
e) positioning the lower surface (312) of the ferrule (300) to fit flush against the surface of the work piece; and
f) welding the end of the stud to the surface of the work piece, whereby during the stud welding process, molten weld material is confined to the bore (318) of the ferrule (300) and gases formed during the welding are vented out of the ferrule through the grooves (322).

## Patentansprüche

1. Presshülse (300) umfassend:
einen Körper (301), der eine obere und untere Oberfläche (314,0 312) und ein Bohrloch (316) aufweist, das sich durch dieses von der oberen Oberfläche (314) zu der unteren Oberfläche (312) erstreckt, wobei das Bohrloch (316) eine Innenwand (318) des Körpers (301) definiert, die untere Oberfläche (312) konfiguriert ist, bündig an eine Oberfläche eines Werkstücks zu passen, an das ein Bolzen zu schweißen ist; und
eine Vielzahl von Rippen (320), die sich von der Innenwand (318) des Körpers (301) nahe der oberen Oberfläche (314) nach innen erstrecken,
**dadurch gekennzeichnet, dass**
die Vielzahl von Rippen (320) nicht alle gleich groß sind und nicht regelmäßig beabstandet um die Innenwand des Bohrlochs angeordnet sind, wobei die Vielzahl von Rippen (320) Kerben (322) definieren, wobei sich jede Kerbe (322) zwischen angrenzenden Rippen (320) erstreckt,
wobei während eines Schweißbetriebs die Vielzahl von Rippen (320) konfiguriert sind, den Bolzen innerhalb der Presshülse (300) zu zentrieren und wobei die Vielzahl von Kerben (322) konfiguriert sind, Gasen, die während des Schweißbetriebs gebildet werden, zu erlauben, aus der Presshülse zu entweichen.

2. Presshülse nach Anspruch 1, wobei das Bohrloch (316) einen runden Querschnitt aufweist.

3. Presshülse nach Anspruch 1, wobei die Vielzahl von Rippen (320) sich von der oberen Oberfläche (314) nach unten zu der unteren Oberfläche (312) erstrecken.

4. Presshülse nach einem der vorstehenden Ansprüche, wobei das Bohrloch (318) ein abgestuftes Bohrloch ist, wobei das abgestufte Bohrloch einen Durchmesser nahe der unteren Oberfläche (312) aufweist, der größer als ein Durchmesser nahe der oberen Oberfläche (314) ist.

5. Presshülse nach einem der vorstehenden Ansprüche, wobei der Körper (301) einen oberen Halsabschnitt (304) und einen unteren Basisabschnitt (302) aufweist und die Vielzahl von Rippen (320) und die Vielzahl von Kerben (322) in dem oberen Halsabschnitt (304) bereitgestellt sind.

6. Presshülse nach Anspruch 1, wobei jede Rippe ein unteres Ende aufweist, wobei die unteren Enden in einer Ebene bereitgestellt sind, die relativ zu der unteren Oberfläche geneigt ist und optional oder bevorzugt, wobei die Rippe (320a), die ein unteres Ende aufweist, das am nächsten zu der unteren Oberfläche (312) positioniert ist, sich um mindestens eine Hälfte eines Umfangs des Bohrlochs (318) erstreckt.

7. Presshülse nach einem der vorstehenden Ansprüche, wobei;
die untere Oberfläche (312) konvex ist oder
die untere Oberfläche (312) konkav ist oder
die untere Oberfläche (312) eine konkave Ecke ist oder
die untere Oberfläche (312) eine konvexe Ecke ist.

8. Presshülse nach einem der vorstehenden Ansprüche, wobei das Bohrloch (318) nicht senkrecht zu der unteren Oberfläche (312) ist.

9. Presshülse nach Anspruch 1, wobei mindestens eine der Vielzahl von Rippen (320) eine Größe aufweist, die sich von den anderen der Vielzahl von Rippen (320) unterscheidet.

10. Presshülse nach Anspruch 9, wobei die mindestens eine der unterschiedlich großen Vielzahl von Rippen (320a) C-förmig ist und die anderen der Vielzahl von Rippen (320b) gleichmäßig zwischen der C-förmigen Rippe beabstandet sind.

11. Presshülse nach Anspruch 10, wobei die C-förmige Rippe (320a) sich um etwa 100 Grad des Bohrlochs (318) erstreckt.

12. Presshülse nach Anspruch 10, wobei der Körper (301) einen Ausrichtungskeil (340) definiert, der an die anderen der Vielzahl von Rippen (320b) angeordnet ist, um den anderen der Vielzahl von Rippen (320b) zu erlauben, an einem Oberseitenende der Presshülse (300) während eines vertikalen Schweißbetriebs positioniert zu sein.

13. Presshülse nach Anspruch 12, weiter umfassend:
den Körper (301), der einen unteren Basisabschnitt (302), der an die untere Oberfläche (312) angrenzend angeordnet ist, und einen oberen Halsabschnitt (304) aufweist, der an die obere Oberfläche (314) angrenzend angeordnet ist;
wobei der obere Halsabschnitt (304) einen oberen Außendurchmesser aufweist, der größer als ein unterer Außendurchmesser des unteren Basisabschnitts (302) ist, um eine Schulter (310) zu definieren, die zwischen dem unteren Basisabschnitt (302) und dem oberen Halsabschnitt (304) angeordnet ist und
die Schulter (310) sich nichtfortlaufend um einen Außenumfang der Presshülse erstreckt, um den Ausrichtungskeil (340) zu definieren.

14. Verfahren zum Schweißen eines Bolzens an ein Werkstück, wobei das Verfahren die Schritte umfasst:
a) Bereitstellen eines Bolzens, der einen gewindelosen Endabschnitt und ein Ende aufweist;
b) Bereitstellen eines Werkstücks, das eine Oberfläche aufweist, an die das Ende des Bolzens zu schweißen ist;
c) Bereitstellen einer Presshülse (300), die einen Körper (301) aufweist, der obere und untere Oberflächen (314, 312) und ein Bohrloch (316) aufweist, das sich durch diesen von der oberen Oberfläche (314) zu der unteren Oberfläche (312) erstreckt, wobei das Bohrloch (316) eine Innenwand (318) des Körpers (301) definiert, wobei die Presshülse weiter eine Vielzahl von Rippen (320) aufweist, die sich von der Innenwand (316) des Körpers nahe der oberen Oberfläche (314) nach innen erstrecken,
**dadurch gekennzeichnet, dass**
die Rippen (320) nicht alle gleich groß sind und unregelmäßig um die Innenwand (316) des Bohrlochs (318) beabstandet sind, wobei die Vielzahl von Rippen (320) Kerben (322) definieren, wobei jede Kerbe (322) sich zwischen angrenzenden Rippen (320) erstreckt;
d) Positionieren des gewindelosen Endabschnitts des Bolzens innerhalb des Bohrlochs (318) der Presshülse (300), wobei die Vielzahl von Rippen (320) der Presshülse sicherstellen, dass der Bolzen innerhalb der Presshülse (300) zentriert ist;
e) Positionieren der unteren Oberfläche (312) der Presshülse (300), um bündig an die Oberfläche des Werkstücks zu passen; und
f) Schweißen des Endes des Bolzens an die Oberfläche des Werkstücks, wobei während des Bolzenschweißprozesses geschmolzenes Schweißmaterial an das Bohrloch (318) der Presshülse (300) begrenzt wird und Gase, die während des Schweißens gebildet werden, durch die Kerben (322) aus der Presshülse entweichen.

## Revendications

1. Virole (300) comprenant :
un corps (301) présentant des surfaces supérieure et inférieure (314,0 312) et un alésage (316) s'étendant à travers celui-ci à partir de la surface supérieure (314) vers la surface inférieure (312), l'alésage (316) définissant une paroi interne (318) du corps (301), la surface inférieure (312) configurée pour s'aligner contre une surface d'une pièce usinée à laquelle un goujon doit être soudé ; et
une pluralité de nervures (320) s'étendant vers l'intérieur à partir de la paroi interne (318) du corps (301) à proximité de la surface supérieure (314)
**caractérisée en ce que**
la pluralité des nervures (320) ne sont pas toutes de la même taille et sont disposées de manière non équidistante autour de la paroi interne de l'alésage, la pluralité de nervures (320) définissant des rainures (322), avec chaque rainure (322) s'étendant entre des nervures adjacentes (320),
dans laquelle, pendant une opération de soudage, la pluralité de nervures (320) sont configurées pour centrer le goujon au sein de la virole (300) et dans laquelle la pluralité de rainures (322) sont configurées pour permettre aux gaz formés pendant l'opération de soudage de s'évacuer de la virole.

2. Virole telle que définie selon la revendication 1, dans laquelle l'alésage (316) présente une section transversale circulaire.

3. Virole telle que définie selon la revendication 1, dans laquelle la pluralité des nervures (320) s'étendent vers le bas à partir de la surface supérieure (314) en direction de la surface inférieure (312).

4. Virole telle que définie selon l'une quelconque des revendications précédentes, dans laquelle l'alésage (318) est un alésage étagé, l'alésage étagé présentant un diamètre à proximité de la surface inférieure (312) qui est plus grand qu'un diamètre à proximité de la surface supérieure (314).

5. Virole telle que définie selon l'une quelconque des revendications précédentes, dans laquelle le corps (301) présente une partie supérieure, de col (304) et une partie inférieure, de base (302) et la pluralité des nervures (320) et la pluralité des rainures (322) sont fournies dans la partie supérieure de col (304).

6. Virole telle que définie selon la revendication 1, dans laquelle chaque nervure présente une extrémité inférieure, dans laquelle les extrémités inférieures sont fournies dans un plan qui est incliné par rapport à la surface inférieure et, facultativement ou de préférence, dans laquelle la nervure (320a) qui présente une extrémité inférieure qui est positionnée le plus à proximité de la surface inférieure (312) s'étend autour d'au moins la moitié d'un périmètre de l'alésage (318).

7. Virole telle que définie selon l'une quelconque des revendications précédentes, dans laquelle ;
la surface inférieure (312) est convexe, ou
la surface inférieure (312) est concave, ou
la surface inférieure (312) est un coin concave, ou
la surface inférieure (312) est un coin convexe.

8. Virole telle que définie selon l'une quelconque des revendications précédentes, dans laquelle l'alésage (318) n'est pas perpendiculaire à la surface inférieure (312).

9. Virole telle que définie selon la revendication 1, dans laquelle au moins une de la pluralité de nervures (320) présentant une taille différente des autres de la pluralité de nervures (320).

10. Virole telle que définie selon la revendication 9, dans laquelle l'au moins une de la pluralité de nervures de tailles différentes (320a) étant en forme de C et les autres de la pluralité de nervures (320b) étant espacées de manière équidistante entre la nervure en forme de C.

11. Virole telle que définie selon la revendication 10, dans laquelle la nervure en forme de C (320a) s'étend autour d'environ 100 degrés de l'alésage (318).

12. Virole telle que définie selon la revendication 10, dans laquelle le corps (301) définit une clé d'orientation (340) disposée de manière adjacente aux autres de la pluralité de nervures (320b) pour permettre aux autres de la pluralité de nervures (320b) d'être positionnées au niveau de l'extrémité supérieure de la virole (300) pendant une opération de soudage vertical.

13. Virole telle que définie selon la revendication 12, comprenant en outre :
le corps (301) présentant une partie inférieure, de base (302) disposée de manière adjacente à la surface inférieure (312) et une partie supérieure, de col (304) disposée de manière adjacente à la surface supérieure (314) ;
la partie supérieure de col (304) présentant un diamètre extérieur supérieur étant supérieur à un diamètre extérieur inférieur de la partie inférieure de base (302) pour définir un épaulement (310) disposé entre la partie inférieure, de base (302) et la partie supérieure, de col (304), et
l'épaulement (310) s'étendant de manière non continue autour d'une circonférence extérieure de la virole pour définir la clé d'orientation (340).

14. Procédé de soudage d'une pièce usinée, le procédé comprenant les étapes consistant à :
a) fournir un goujon présentant une partie d'extrémité non filetée et une extrémité ;
b) fournir une pièce usinée présentant une surface à laquelle l'extrémité du goujon doit être soudée ;
c) fournir une virole (300) présentant un corps (301) présentant des surfaces supérieure et inférieure (314, 312) et un alésage (316) s'étendant à travers celui-ci à partir de la surface supérieure (314) vers la surface inférieure (312), l'alésage (316) définissant une paroi interne (318) du corps (301), la virole présentant en outre une pluralité de nervures (320) s'étendant vers l'intérieur à partir de la paroi interne (316) du corps à proximité vers la surface supérieure (314),
**caractérisée en ce que**
les nervures (320) ne sont pas toutes de la même taille et disposées de manière non équidistante autour de la paroi interne (316) de l'alésage (318), la pluralité des nervures (320) définissant des rainures (322), avec chaque rainure (322) s'étendant entre des nervures adjacentes (320) ;
d) positionner la partie d'extrémité non filetée du goujon au sein de l'alésage (318) de la virole (300), la pluralité de nervures (320) de la virole garantissant que le goujon est centré au sein de la virole (300) ;
e) positionner la surface inférieure (312) de la virole (300) de manière à ce qu'elle s'aligne contre la surface de la pièce usinée ; et
f) souder l'extrémité du goujon à la surface de la pièce usinée, selon laquelle, pendant le processus de soudage du goujon, du matériau de soudure en fusion est limité à l'alésage (318) de la virole (300) et des gaz formés pendant le soudage sont évacués de la virole à travers les rainures (322).
